# FASCICULE DE BREVET EUROPEEN

(11) **EP 2 937 645 B1**
(45) Date de publication et mention de la délivrance du brevet: **30.06.2021**
(21) Numéro de dépôt: 15164555.3
(22) Date de dépôt: 21.04.2015
(51) Int. Cl.: F24S 60/00, F24S 60/10, F24F 5/00, F28D 20/02

(54) **DISPOSITIF DE CHAUFFAGE ET/OU DE RAFRAICHISSEMENT POUR BÂTIMENT À CIRCULATION LONGITUDINALE D'AIR À TRAVERS LE RÉSERVOIR DE STOCKAGE**
HEIZ- UND/ODER KÜHLVORRICHTUNG FÜR GEBÄUDE MIT LUFTZIRKULATION IN LÄNGSRICHTUNG DURCH DEN SPEICHERTANK
HEATING AND/OR COOLING DEVICE FOR A BUILDING WITH LONGITUDINAL CIRCULATION OF AIR THROUGH THE STORAGE TANK

(30) Priorité: 22.04.2014 FR 1453576
(43) Date de publication de la demande: 28.10.2015
(73) Titulaire: COMMISSARIAT À L'ÉNERGIE ATOMIQUE ET AUX ÉNERGIES ALTERNATIVES, 75015 Paris (FR)
(72) Inventeur: CLAUDON, Fabrice, 73000 CHAMBERY (FR); LEROUX, Guillian, 73000 CHAMBERY (FR)
(74) Mandataire: Novaimo

(56) Documents cités:
- WO-A1-2011/062541
- WO-A2-2009/125159
- DE-A1- 3 801 199
- DE-U1-202006 020 354
- DE-U1-202012 000 018
- FR-A2- 2 579 303
- US-A- 4 213 448
- US-A- 4 250 871
- None

## Description

### Domaine technique de l'invention

L'invention concerne un dispositif de chauffage et/ou de rafraichissement pour bâtiment, comprenant un capteur thermique solaire délimitant un premier volume de circulation fluidique configuré de sorte à permettre une circulation d'un flux d'air à travers le capteur thermique solaire selon une première direction générale d'écoulement.

### État de la technique

Un dispositif de chauffage et/ou de rafraîchissement pour bâtiment est connu de FR2579303 A2.

De plus, il est connu d'associer un capteur thermique solaire et un réservoir de stockage d'énergie thermique dans un flux aéraulique d'une manière permettant de circuler dans le réservoir de stockage d'énergie thermique et potentiellement dans le capteur thermique solaire au préalable.

De telles solutions sont par exemple décrites dans les documents US4250871A, US4213448A, DE19800560C1 et WO2005/008145A1.

Une telle association permet qu'un flux d'air prélevé depuis un milieu extérieur à un bâtiment puisse circuler en série dans le capteur thermique solaire puis dans le réservoir de stockage d'énergie thermique. Il peut aussi être prévu des moyens permettant que le flux d'air circulant à travers le réservoir de stockage d'énergie thermique n'ait préalablement pas circulé à travers le capteur thermique solaire et provienne directement du milieu extérieur. L'air ayant circulé à travers le réservoir de stockage d'énergie thermique peut être insufflé dans un circuit de ventilation pour le milieu intérieur au bâtiment ou être rejeté vers le milieu extérieur.

Ces différentes possibilités d'associations et d'organisations permettent de constituer un dispositif de chauffage et/ou de rafraichissement pour bâtiment. Il permet de préchauffer l'air extérieur en hiver dans un mode de fonctionnement hiver et/ou de rafraichir l'air extérieur en été dans un mode de fonctionnement été. Il est connu d'implémenter des modes de fonctionnement transitoires durant l'automne et/ou le printemps.

Il existe un besoin de fournir une alternative aux dispositifs de chauffage et/ou de rafraichissement existants qui ne donnent pas une totale satisfaction. En particulier, il existe un besoin de fournir un dispositif de chauffage et/ou de rafraichissement qui présente un bon rendement énergétique, qui permette une bonne qualité de la ventilation de l'air dans le réservoir de stockage d'énergie, notamment dans le cas où le réservoir serait accolé au capteur thermique solaire.

### Objet de l'invention

Le but de la présente invention est de proposer un dispositif de chauffage et/ou de rafraichissement pour bâtiment qui remédie aux inconvénients mentionnés ci-dessus et de répondre au besoin présenté.

Ce but est atteint par un dispositif de chauffage et/ou de rafraichissement selon la revendication 1

Différents modes de réalisation du dispositif sont définis par les revendications 2 à 15.

L'invention porte aussi sur un système de ventilation comprenant un dispositif tel que précédemment défini.

L'invention porte enfin sur un bâtiment comprenant un dispositif ou un système de ventilation tel que précédemment défini.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une vue schématique en perspective d'un exemple de dispositif de chauffage et/ou de rafraichissement selon l'invention,
- la figure 2 est un diagramme qui illustre la répartition du débit de l'air dans le réservoir de stockage d'énergie thermique en fonction de l'emplacement considéré le long de la longueur du réservoir de stockage d'énergie thermique dans un mode de fonctionnement en déstockage,
- les figures 3 et 4 représentent le principe de fonctionnement dans un mode hiver durant la journée,
- les figures 5 et 6 représentent le principe de fonctionnement dans le mode hiver durant la nuit,
- les figures 7 et 8 représentent le principe de fonctionnement dans un mode demi-saison, respectivement durant la journée et durant la nuit,
- et les figures 9 et 10 représentent le principe de fonctionnement dans un mode été, respectivement durant la journée et durant la nuit.

### Description de modes préférentiels de l'invention

Initialement, il était proposé, dans le cas où le réservoir de stockage d'énergie thermique est difficile à intégrer dans le bâtiment, par exemple dans le cas d'une maison avec des combles aménagées, d'accoler le réservoir de stockage d'énergie thermique au capteur thermique solaire. Le réservoir de stockage d'énergie thermique est notamment disposé au-dessus du capteur thermique solaire et configuré de sorte à permettre une circulation à travers le réservoir de stockage d'énergie thermique du flux d'air en provenance du capteur thermique solaire selon une direction générale d'écoulement sensiblement parallèle à la direction générale d'écoulement du flux à l'intérieur du capteur thermique solaire. La direction générale d'écoulement dans le réservoir de stockage d'énergie thermique est orientée selon une direction transversale perpendiculaire à l'axe longitudinal du réservoir de stockage d'énergie thermique, c'est-à-dire suivant sa hauteur et/ou suivant sa largeur.

Le capteur thermique solaire comprend en partie basse une entrée d'air agencée sur une petite partie centrale de la largeur du capteur thermique solaire. Le flux provenant du capteur thermique solaire est insufflé dans la partie basse du réservoir de stockage d'énergie thermique de stockage d'énergie thermique qui comprendrait par exemple une pluralité de plaques en matériau à changement de phase orientées verticalement et parallèles entre elles sur la longueur du réservoir orientée horizontalement. Ces plaques délimiteraient deux à deux des lames d'air parallèles au plan de la lame d'air délimitée par le capteur thermique solaire. Entre deux plaques adjacentes, le flux admis circule verticalement de bas en haut pour sortir du réservoir dans sa partie haute.

Des simulations numériques montrent cependant que la nuit, que ce soit en été ou en hiver, l'air circule de façon majoritaire au centre du capteur thermique solaire. Notamment, il est constaté qu'environ 60% du débit d'air ne circule verticalement qu'au centre du capteur thermique solaire. Cette solution présente aussi le problème important d'une mauvaise ventilation aéraulique du réservoir de stockage, notamment la nuit, l'hiver durant des phases de déstockage d'énergie thermique par le réservoir de stockage d'énergie thermique. Une mauvaise homogénéité de ventilation ne permet pas de récupérer efficacement les calories disponibles et emmagasinées la journée. Ceci présente un impact direct sur le rendement global du dispositif de chauffage et/ou de rafraichissement.

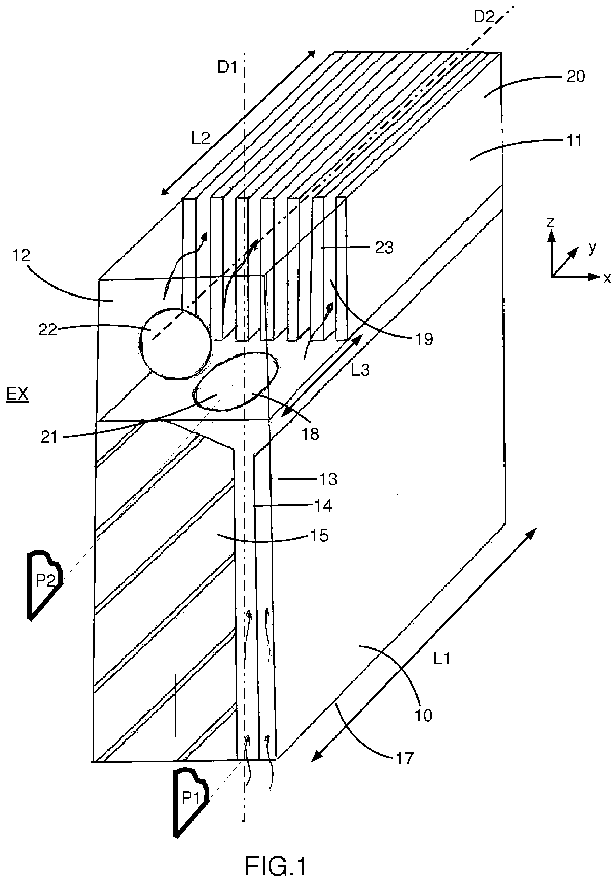

La solution qui est décrite en référence aux figures 1 à 10 concerne ainsi un dispositif de chauffage et/ou de rafraichissement pour bâtiment, détaillé ci-dessous, améliorant cette situation.

Pour une meilleure compréhension, un référentiel orthogonal (X, Y, Z) est associé au dispositif de chauffage et/ou de rafraichissement. Ce repère est fixe par rapport au dispositif et s'oriente dans le référentiel absolu terrestre en même temps que le dispositif.

Le dispositif comprend un capteur thermique solaire 10 et un réservoir de stockage d'énergie thermique 11. Le capteur thermique solaire 10 délimite un premier volume de circulation fluidique configuré de sorte à permettre une circulation d'un flux d'air prélevé dans un milieu extérieur EX au bâtiment 16 à travers le capteur thermique solaire 10 selon une première direction générale d'écoulement, notée D1 et incluse dans un premier plan.

Un réservoir de stockage d'énergie thermique est un dispositif qui permet de stocker de l'énergie thermique, c'est-à-dire qu'il est possible de transférer de l'énergie thermique d'un milieu vers ce dispositif, puis, ultérieurement, de transférer cette énergie thermique ou une partie de cette énergie thermique de ce dispositif vers ce milieu ou vers un autre milieu. De préférence, le transfert d'énergie thermique n'est pas réalisé par déplacement d'un matériau d'un point à un autre, mais par transfert d'énergie thermique d'un matériau à un autre. Un tel réservoir de stockage d'énergie thermique ne peut pas être constitué par une simple canalisation ou un simple caisson, ni par un volume libre de fluide délimité par ce caisson ou cette canalisation. Par exemple, le réservoir de stockage d'énergie thermique présente une capacité thermique typiquement de 15000 kJ ou d'au moins 15000 kJ (chaleur latente de changement de phase). Selon l'invention, le réservoir de stockage d'énergie est associé à un échangeur thermique ou inclut un échangeur thermique, l'échangeur permettant de favoriser ou améliorer les échanges thermiques entre le milieu (soit le fluide caloporteur) et le réservoir. L'échangeur peut comprendre des plaques 23 comme il sera vu plus bas. Le réservoir de stockage est distinct du fluide caloporteur.

Le réservoir de stockage d'énergie thermique 11 délimite un deuxième volume de circulation fluidique configuré de sorte à permettre une circulation à travers le réservoir de stockage d'énergie thermique 11 du flux d'air en provenance du capteur thermique solaire 10 selon une deuxième direction générale d'écoulement D2 colinéaire à un axe longitudinal du réservoir de stockage d'énergie thermique 11. Cette deuxième direction D2 est sensiblement perpendiculaire à la première direction D1 et elle est contenue dans un deuxième plan P2 parallèle à, ou confondu avec, un premier plan P1 au niveau d'une sortie 18 du capteur thermique solaire 10. Le deuxième plan P2 est parallèle au plan (Y, Z) et le premier plan P1 est parallèle au plan (Y, Z). Le plan P2 peut contenir l'axe longitudinal du réservoir.

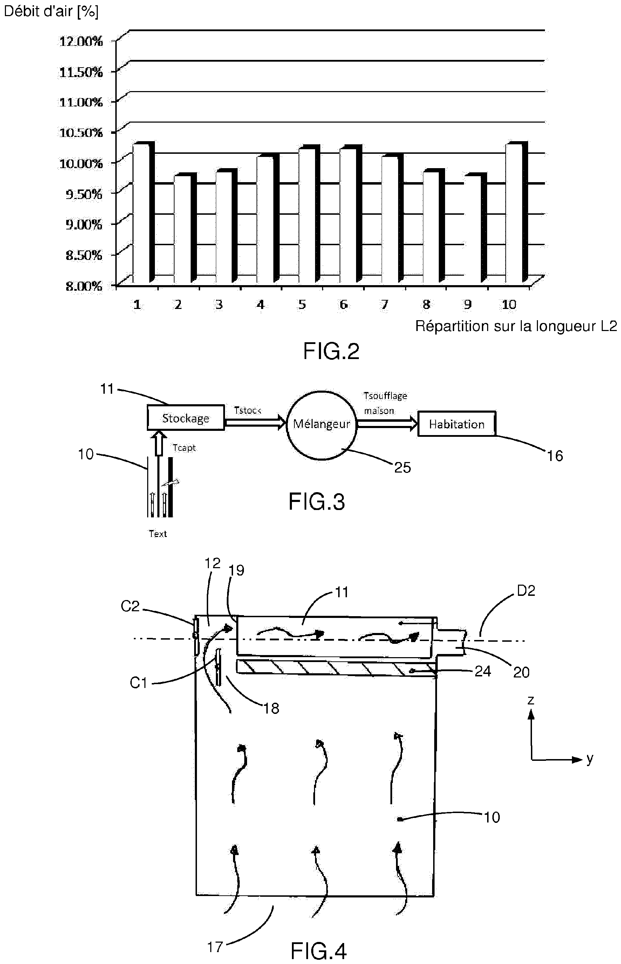

Ces dispositions permettent avantageusement, comme cela est illustré sur la figure 2 au sujet de la répartition du débit de l'air dans le réservoir de stockage d'énergie thermique 11 durant une phase de déstockage de calories, que la distribution de flux dans le réservoir de stockage d'énergie thermique soit particulièrement homogène. Sur le diagramme, le débit de l'air (en ordonnée) dans le réservoir de stockage d'énergie thermique 11 est sensiblement constant indépendamment de l'emplacement considéré (en abscisse) le long de la longueur L2 du réservoir de stockage d'énergie thermique 11. Cette répartition est évaluée, en segmentant fictivement la longueur L2 du réservoir 11 en dix tranches égales numérotées de 1 à 10 sur la figure 2 (n° des tranches mentionnées en abscisse). Le débit de l'air indiqué en ordonnée est évalué pour chacune des tranches 1 à 10.

Dans la suite de la description, sauf indication contraire, le terme « sensiblement » signifie « exactement ou à 10% près ».

Pour un élément donné choisi parmi le capteur thermique solaire 10 et le réservoir de stockage d'énergie thermique 11, la «direction générale d'écoulement » correspond de préférence à la ligne de courant de l'écoulement moyen du flux d'air entre l'entrée et la sortie de cet élément, notamment fonction des vitesses relatives des couches d'air, que l'écoulement soit laminaire ou turbulent.

Le terme « axe longitudinal » associé au réservoir de stockage d'énergie thermique 11 correspond à la plus grande dimension L2 du réservoir 11, par exemple sa longueur en regard de sa largeur ou de son épaisseur dans le cas où le réservoir de stockage d'énergie thermique 11 présente une forme parallélépipédique, ce qui correspond à l'exemple illustré de manière non limitative quant à la liberté de conception et d'organisation du réservoir de stockage d'énergie thermique.

Par conséquent, l'écoulement moyen du flux d'air à travers le réservoir de stockage d'énergie thermique 11 se pratique de part en part sur sa longueur L2 suivant la direction Y. Autrement dit, la direction générale d'écoulement D2 à travers le réservoir de stockage d'énergie thermique 11 est sensiblement orientée selon la direction Y, sensiblement perpendiculairement à la direction générale d'écoulement D1 à travers le capteur thermique solaire 10 qui quant à elle est sensiblement orientée selon la direction Z.

Le premier volume de circulation fluidique délimité par le capteur thermique solaire 10 est constitué par au moins une lame d'air, de forme plane. Le premier plan mentionné ci-avant correspond au plan d'orientation de ladite au moins une lame d'air au niveau de la sortie 18 du capteur thermique solaire 10. Dans ce document, par « lame d'air » associée au capteur thermique solaire 10, il est de préférence compris que l'épaisseur du premier volume de circulation fluidique délimité par le capteur thermique solaire 10 en vu de la circulation du flux d'air, comptée perpendiculairement au premier plan, est très largement inférieure à sa largeur et à sa hauteur respectivement comptée horizontalement et verticalement dans le premier plan. A titre d'exemple, pour un capteur thermique solaire 10 dont la largeur selon Y et la hauteur selon Z sont de 3 mètres, l'épaisseur selon X pourra être de l'ordre de 5 cm.

Selon l'invention, la lame d'air délimitée par le premier volume est de forme plane, orienté selon le plan (Y, Z) et le premier plan correspond au plan d'orientation général de la lame d'air plane.

Dans un mode de réalisation, tel qu'illustré mais non limitatif du champ d'application de l'invention et selon lequel le capteur thermique solaire 10 peut être de nature quelconque, le capteur thermique solaire 10 comprend un vitrage 13, un élément absorbeur 14 et un élément thermiquement isolant 15. Le vitrage 13 et l'élément absorbeur 14 délimitent entre eux une lame d'air orientée dans le premier plan et l'élément absorbeur 14 et l'élément thermiquement isolant 15 délimitent entre eux une autre lame d'air, parallèle, également orientée dans le premier plan. Dans ce cas particulier, ces deux lames d'air correspondent à la définition du premier volume d'écoulement fluidique.

Bien que la nature du réservoir de stockage d'énergie thermique 11 puisse être quelconque, il pourra avantageusement comprendre un carter formé dans un matériau thermiquement conducteur. Par exemple, la conductivité thermique du matériau thermiquement conducteur est au moins égale à 20 W.m⁻¹.K⁻¹. Le dispositif peut comprendre un élément d'isolation thermique 21 disposé entre le capteur thermique solaire 10 et ce carter, c'est-à-dire interposé entre le capteur thermique solaire 10 et le carter du réservoir de stockage d'énergie thermique 11 suivant la direction Z. Par exemple, le coefficient d'échange thermique de l'élément d'isolation thermique vaut 5 m².K.W⁻¹ ou plus de 5 m².K.W⁻¹.

Comme il le sera détaillé plus loin, le dispositif peut aussi comprendre au moins un élément de distribution 12 ayant plusieurs fonctions dont l'une est de collecter le flux d'air en provenance du capteur thermique solaire 10 et de le distribuer vers le réservoir de stockage d'énergie thermique 11. De manière avantageuse, une autre fonction est au contraire de prélever de l'air directement depuis le milieu extérieur EX (sans circuler à travers le capteur thermique solaire 10) et de le distribuer directement vers le réservoir de stockage d'énergie thermique 11. Cette fonction sera avantageusement utilisée lorsque le dispositif est utilisé en été. Le flux d'air ayant circulé à travers le réservoir de stockage d'énergie thermique 11 peut ensuite être insufflé dans un circuit de ventilation (non représenté en tant que tel) pour le milieu intérieur au bâtiment 16 ou être rejeté vers le milieu extérieur EX. En jouant au niveau de l'élément de distribution 12 sur les conditions de circulation à travers le réservoir de stockage d'énergie thermique 11 et éventuellement à travers le capteur thermique solaire 10, le dispositif permet notamment de préchauffer l'air extérieur dans un mode de fonctionnement « hiver » et/ou de rafraichir l'air extérieur dans un mode de fonctionnement « été ».

Les figures ci-jointes 3, 5, 7 à 10, font aussi apparaître, pour le circuit de ventilation, un mélangeur 25 optionnel, disposé entre le réservoir de stockage d'énergie thermique 11 et le bâtiment 16. Il fait de préférence partie intégrante du système de ventilation mécanique par insufflation et il permet de modérer, par un mélange piloté avec un autre flux d'air directement prélevé depuis le milieu extérieur EX, la température insufflée dans le bâtiment lorsque la température en sortie du réservoir 11, notée « Tstock » est trop élevée notamment. La température du flux d'air en sortie du mélangeur 25 et insufflé dans le bâtiment 16 est repérée « Tsoufflage maison ».

Selon un mode de réalisation non limitatif, le réservoir de stockage d'énergie thermique 11 comprend une pluralité de plaques 23 parallèles selon l'axe longitudinal du réservoir de stockage d'énergie thermique 11 et chacune incluant un matériau à changement de phase. Les enveloppes de ces plaques peuvent constituer le carter. A titre d'exemple, la température de changement de phase peut être par exemple comprise entre 20 et 30°C. Les plaques 23 sont par exemple orientées verticalement et délimitent entre elles, deux à deux, une pluralité de lames d'air parallèles entre elles et par rapport au premier plan défini en référence au capteur thermique solaire 10. C'est la réunion de cette pluralité de lames d'air qui définit le deuxième volume de circulation fluidique. L'endroit où débouche ces lames d'air au niveau de l'élément de distribution 12 peut délimiter à la fois l'entrée 19 du réservoir de stockage d'énergie thermique 11 et la sortie de l'élément de distribution 12. Dans ce document, par « lame d'air » associée au réservoir de stockage d'énergie thermique 11, il est de préférence compris que l'épaisseur du volume délimité entre deux plaques 23 adjacentes en vu de la circulation du flux d'air dans le réservoir de stockage d'énergie thermique 11, comptée selon X perpendiculairement au plan des plaques 23, est très largement inférieure à la longueur et à la hauteur des plaques 23 respectivement comptée selon les directions Y et Z.

A titre d'exemple associé à une maison résidentielle de 100 m², la surface vitrée du capteur thermique solaire 10 au niveau du vitrage 13 sera de 10 m² et le réservoir de stockage d'énergie thermique 11 contiendra une centaine de litres de matériau à changement de phase.

Il reste que la nature des éléments solides de stockage d'énergie thermique qui délimitent entre eux le deuxième volume de circulation fluidique pourra être différente, par exemple sous la forme d'ondulations ou de billes ou de cavités.

Différents modes de fonctionnement peuvent être implémentés tels que ceux cités en référence aux figures 3 à 10.

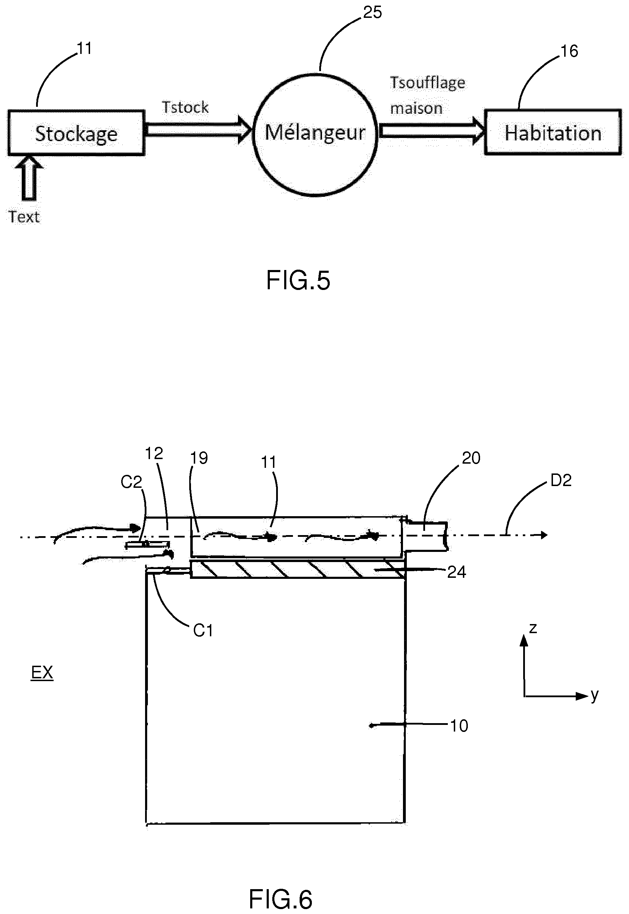

En particulier, les figures 3 à 6 représentent le principe de fonctionnement dans le mode hiver, durant la journée pour les figures 3 et 4 et durant la nuit pour les figures 5 et 6.

Dans le mode hiver, durant la journée (figures 3 et 4) ce qui correspond à un mode de fonctionnement de type stockage d'énergie pour le réservoir de stockage d'énergie thermique 11, le flux d'air est prélevé par le capteur thermique solaire 10 depuis le milieu extérieur à la température « Text » par exemple de l'ordre de 5°C, puis il circule à travers le capteur thermique solaire 10 pour en sortir à la température « Tcapt » qui est par exemple de l'ordre de 60°C, puis il circule à travers le réservoir de stockage d'énergie thermique 11 afin de réaliser un stockage d'énergie par échange de chaleur. La température « Tstock » en sortie de réservoir 11 est par exemple d'environ 40°C. L'air peut alors être insufflé vers le circuit de ventilation pour le milieu intérieur au bâtiment 16 par l'intermédiaire du mélangeur 25. La température « Tsoufflage maison » est dans ce cas égale à la température « Tstock ». La figure 4 montre plus précisément la circulation du flux d'air dans le dispositif, successivement à travers le capteur thermique solaire 10, puis à travers l'élément de distribution 12 et puis à travers le réservoir 11 durant la journée dans le mode hiver.

Dans le mode hiver et durant la nuit par contre (figures 5 et 6) ce qui correspond à un mode de déstockage d'énergie pour le réservoir 11, le flux d'air est prélevé par l'élément de distribution 12 depuis le milieu extérieur EX à la température « Text » par exemple de l'ordre de 0°C, puis il circule uniquement à travers le réservoir de stockage énergie thermique 11 pour en sortir à la température « Tstock » par exemple de l'ordre de 20 à 30°C, puis il est directement insufflé vers le circuit de ventilation pour le milieu intérieur au bâtiment 16. Il peut tout de même avantageusement passer à travers le mélangeur 25 sans toutefois être mélangé à de l'air provenant du milieu extérieur EX. La température « Tsoufflage maison » est dans ce cas égale à la température « Tstock ». Le capteur thermique solaire 10 est by-passé dans ce mode de fonctionnement, c'est-à-dire que le flux d'air ne circule pas à travers le capteur thermique solaire 10. La figure 6 montre plus précisément la circulation du flux d'air dans le dispositif, successivement à travers l'élément de distribution 12, puis à travers le réservoir 11 durant la nuit dans le mode hiver.

Pour une bonne compréhension de l'organisation spatiale du dispositif, le premier plan mentionné précédemment est constitué, sur les figures 4 et 6, par le plan de la feuille tandis que le deuxième plan est repéré P2 sur ces deux figures 4 et 6.

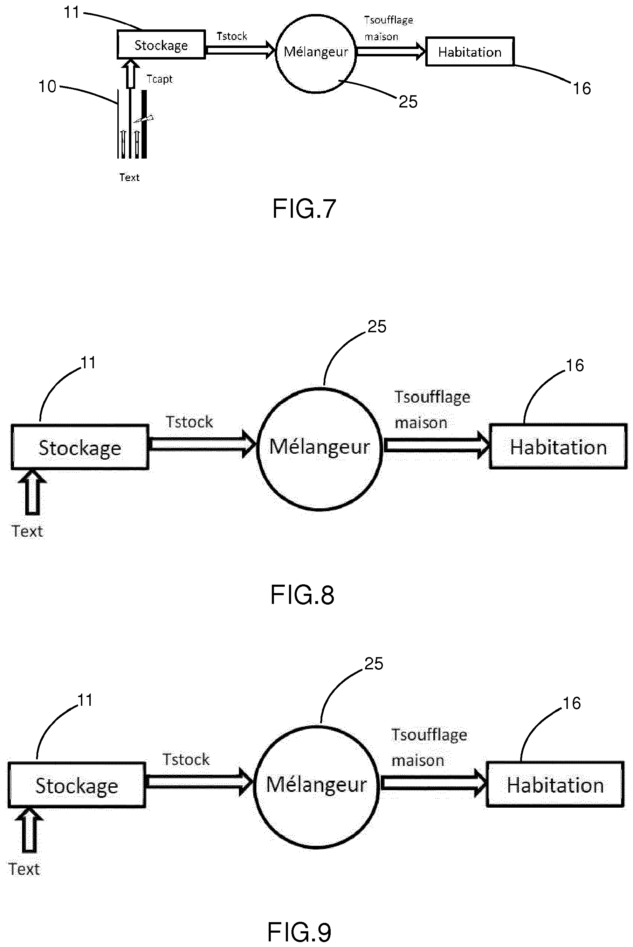

Les figures 7 et 8 représentent ensuite le principe de fonctionnement dans un mode demi-saison destiné à être mis en œuvre en automne et/ou au printemps, respectivement durant la journée et durant la nuit.

Dans le mode demi-saison et durant la journée (situation de la figure 7), le flux d'air est prélevé par le capteur thermique solaire 10 depuis le milieu extérieur à la température « Text » qui est par exemple environ égale à 15°C, puis circule à travers le capteur thermique solaire 10 pour en sortir à la température « Tcapt », qui est par exemple de l'ordre de 70°C, puis il circule à travers le réservoir 11 pour en sortir à la température « Tstock », par exemple de l'ordre de 50°C. Le flux d'air à la température Tstock sortant du réservoir 11 est mélangé par le mélangeur 25 avec un flux d'air provenant du milieu extérieur et à la température Text. Le flux d'air obtenu en sortie du mélangeur 25 est insufflé dans le milieu intérieur au bâtiment 16, à la température « Tsoufflage maison » qui est par exemple compris entre 20 et 30°C. Il s'agit d'un mode de fonctionnement de type stockage d'énergie pour le réservoir de stockage d'énergie thermique 11.

Dans le mode demi-saison et durant la nuit maintenant (situation de la figure 8), qui correspond par contre à un mode de fonctionnement de type déstockage d'énergie pour le réservoir de stockage d'énergie thermique 11, le flux d'air est prélevé par l'élément de distribution 12 depuis le milieu extérieur EX à la température « Text » par exemple de l'ordre de 0°C, puis circule uniquement à travers le réservoir de stockage d'énergie thermique 11 pour en sortir à la température « Tstock » par exemple comprise entre 20 et 30°C, puis il est insufflé vers le circuit de ventilation pour le milieu intérieur au bâtiment 16. Il peut tout de même avantageusement passer à travers le mélangeur 25 sans toutefois être mélangé à de l'air provenant du milieu extérieur EX. La température « Tsoufflage maison » est dans ce cas égale à la température « Tstock ». Le capteur thermique solaire 10 est ainsi by-passé dans ce mode de fonctionnement, c'est-à-dire que le flux d'air ne circule pas à travers le capteur thermique solaire 10. La circulation du flux d'air dans cette situation correspond à celle déjà décrite au sujet de la figure 6.

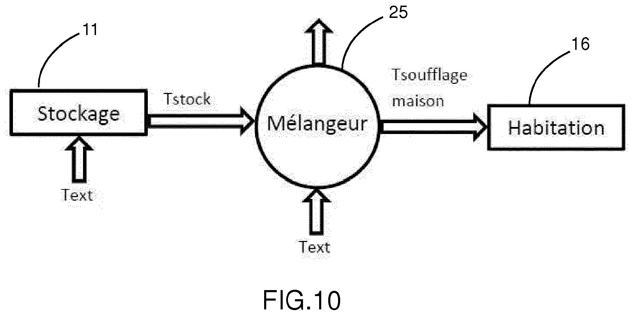

Les figures 9 et 10 représentent le principe de fonctionnement dans un mode été, respectivement durant la journée et durant la nuit.

Dans le mode été et durant la journée (situation de la figure 9), le flux d'air est prélevé par l'élément de distribution 12 depuis le milieu extérieur EX à la température « Text » qui est par exemple de l'ordre de 30°C, puis circule uniquement à travers le réservoir 11 pour en sortir à la température « Tstock » qui est par exemple comprise entre 20 et 30°C, puis est insufflé vers le circuit de ventilation pour le milieu intérieur au bâtiment 16. Il peut tout de même avantageusement passer à travers le mélangeur 25 sans toutefois être mélangé à de l'air provenant du milieu extérieur EX. La température « Tsoufflage maison » est dans ce cas égale à la température « Tstock ». Le capteur thermique solaire 10 est ainsi by-passé dans ce mode de fonctionnement, c'est-à-dire que le flux d'air ne circule pas à travers le capteur thermique solaire 10. La circulation du flux d'air dans cette situation correspond à celle déjà décrite au sujet de la figure 6.

Dans le mode été et durant la nuit (situation de la figure 10), le flux d'air est prélevé par l'élément de distribution 12 depuis le milieu extérieur EX à la température « Text » qui est par exemple de l'ordre de 15°C, puis circule à travers le réservoir de stockage d'énergie thermique 11 pour en sortir à la température « Tstock » qui est par exemple de l'ordre de 20 à 30°C, avant d'être rejeté vers le milieu extérieur EX par le mélangeur 25. Parallèlement, de l'air à la température « Text » est directement insufflé vers le milieu intérieur au bâtiment 16, sans circuler à travers le réservoir de stockage d'énergie thermique 11, l'élément de distribution 12 ou le capteur thermique solaire 10. La température « Tsoufflage maison » est dans ce cas égale à la température « Text ». Le capteur thermique solaire 10 est by-passé dans ce mode de fonctionnement, c'est-à-dire que le flux d'air ne circule pas à travers le capteur thermique solaire 10.

Selon un mode de réalisation particulier, le premier plan correspondant à la circulation du flux d'air à travers le capteur thermique solaire 10 est un plan vertical dans le référentiel terrestre absolu et la deuxième direction générale d'écoulement D2 est sensiblement horizontale dans le référentiel terrestre absolu. Dans ce cas, les directions X et Y sont orientées selon l'horizontale et la direction Z est orientée selon la verticale. Il reste toutefois que l'orientation du repère (X, Y, Z) peut être différente de cette situation particulière, par exemple dans le cas envisagé où le capteur thermique solaire 10 est intégré dans un toit présentant une inclinaison non nulle par rapport à l'horizontale.

Dans ce document, les termes « verticale » et « horizontale » correspondent aux directions verticale et horizontale dans le référentiel terrestre absolu distinct du référentiel (X, Y, Z).

Il sera avantageusement fait en sorte que tout ou partie du réservoir de stockage d'énergie thermique 11 soit disposé au-dessus du capteur thermique solaire 10 selon la verticale. Le réservoir de stockage d'énergie thermique 11 est donc globalement situé dans le prolongement du capteur thermique solaire 10 dans le premier plan. De préférence, le réservoir de stockage d'énergie thermique 11 pourra être directement accolé au capteur thermique solaire 10.

Selon un mode de réalisation, le capteur thermique solaire 10 comprend :
- une entrée 17 disposée dans une partie inférieure (vue suivant la direction Z) du capteur thermique solaire 10 permettant au flux d'air destiné à circuler à travers le capteur thermique solaire 10 de pénétrer dans le premier volume de circulation fluidique,
- la sortie 18 disposée dans une partie supérieure (vue suivant la direction Z) du capteur thermique solaire 10 permettant au flux d'air ayant circulé à travers le capteur thermique solaire 10 de sortir hors du premier volume de circulation fluidique.

Dans ce cas, l'entrée 17 et la sortie 18 du capteur thermique solaire 10 sont décalées entre elles verticalement le long du premier plan. Cela permet notamment que la première direction générale d'écoulement D1 soit sensiblement verticale et que le sens de circulation du flux d'air soit dirigé de bas en haut le long de la première direction D1 à l'intérieur du capteur thermique solaire 10.

Selon un mode de réalisation particulier, l'entrée 17 du capteur thermique solaire 10 est agencée sur toute la largeur L1 du capteur thermique solaire 10 vue dans le premier plan, suivant la direction Y. La direction selon laquelle la largeur L1 du capteur thermique solaire 10 est définie et l'axe longitudinal du réservoir de stockage d'énergie thermique 11 selon laquelle sa longueur L2 est définie sont identiques et orientées selon la direction Y. A l'inverse de son entrée 17, la sortie 18 du capteur thermique solaire 10 est agencée sur une partie seulement, notée L3, de la largeur totale L1 du capteur thermique solaire 10. Cette partie L3 est située uniquement sur un côté latéral droit ou gauche du capteur thermique solaire 10 suivant sa largeur L1. Autrement dit, le rapport entre la partie L3 de largeur suivant Y selon laquelle la sortie 18 s'étend et la largeur totale L1 du capteur thermique solaire 10 suivant Y est strictement inférieur à 1, notamment inférieur à 0,5, de préférence inférieur à 0,3.

La sortie 18 du capteur thermique solaire 10 est de préférence configurée en outre de sorte à permettre au flux d'air sortant du premier volume de circulation fluidique de s'écouler verticalement de bas en haut selon le premier plan à travers cette sortie 18. La direction selon laquelle le flux d'air sortant du capteur thermique solaire 10 traverse la sortie 18 est globalement parallèle à la première direction D1 et donc sensiblement perpendiculaire à la deuxième direction D2. Pour un flux d'air passant du capteur thermique solaire 10 vers le réservoir de stockage d'énergie thermique 11, le changement de direction d'environ 90 degrés pour le passage de la première direction D1 à la deuxième direction D2 est réalisé par et à l'intérieur de l'élément de distribution 12.

En complément, le réservoir de stockage d'énergie thermique 11 peut avantageusement comprendre :
- l'entrée 19 précédemment mentionnée, disposée d'un premier côté longitudinal du réservoir de stockage d'énergie thermique 11 vu selon son axe longitudinal (c'est-à-dire vu dans la direction Y) permettant au flux d'air provenant du capteur thermique solaire 10 de pénétrer dans le deuxième volume de circulation fluidique,
- une sortie 20 disposée d'un deuxième côté longitudinal du réservoir de stockage d'énergie thermique 11, opposé audit premier côté longitudinal selon cet axe longitudinal, permettant au flux d'air de sortir hors du deuxième volume de circulation fluidique après la traversée du réservoir de stockage d'énergie thermique 11.

L'entrée 19 et la sortie 20 sont décalées entre elles selon l'axe longitudinal du réservoir 11, c'est-à-dire selon la direction Y. Plus précisément, l'entrée 19 et la sortie 20 sont en regard l'une de l'autre selon l'axe longitudinal du réservoir 11, c'est-à-dire selon la direction Y, séparées entre elles par le deuxième volume de circulation fluidique et par les éléments solides de stockage d'énergie thermique (par exemple sous la forme de plaques 23 comme il l'a déjà été expliqué) qui délimitent entre eux le deuxième volume de circulation fluidique.

Il résulte des dispositions précédentes que, dans un plan (Y, Z), l'angle formé entre d'une part la direction reliant l'entrée 17 et la sortie 18 du capteur thermique solaire 10 et d'autre part la direction reliant l'entrée 19 et la sortie 20 du réservoir 11 est supérieur ou égal à 45 degrés, par exemple sensiblement de l'ordre de 90 degrés.

Lorsque le premier plan est vertical, la circulation du flux d'air dans le deuxième volume de circulation fluidique, à l'intérieur du réservoir de stockage d'énergie thermique 11, se pratique horizontalement de l'entrée 19 vers la sortie 20 du réservoir 11, suivant la longueur L2 du réservoir de stockage d'énergie thermique 11 et parallèlement au premier plan de circulation à l'intérieur du capteur thermique solaire 10.

Avantageusement pour favoriser la circulation à l'intérieur du réservoir de stockage d'énergie thermique 11 sur sa longueur L2, l'entrée 19 et la sortie 20 du réservoir de stockage d'énergie thermique 11 peuvent chacune être configurées de sorte à permettre un écoulement horizontal du flux d'air qui la traverse. L'entrée 19 du réservoir de stockage d'énergie thermique 11 peut notamment déboucher dans l'élément de distribution 12 au niveau d'une sortie de l'élément de distribution 12.

De préférence, l'élément de distribution 12 est disposé au-dessus du capteur thermique solaire 10 selon la verticale et à côté du réservoir de stockage d'énergie thermique 11 selon l'horizontale. L'élément de distribution 12 est disposé dans l'alignement du réservoir de stockage d'énergie thermique 11 selon l'axe longitudinal du réservoir 11, c'est-à-dire selon la direction Y. Cela peut favoriser l'écoulement de bas en haut d'un flux d'air chauffé à travers le capteur thermique solaire 10 tout en permettant une implantation du réservoir 11 de manière accolée au capteur thermique solaire 10, ce qui peut être intéressant voire nécessaire dans certaines situations, telles qu'une habitation ayant des combles aménagés.

La sortie 18 du capteur thermique solaire 10 débouche dans l'élément de distribution 12 au niveau d'une première entrée 21 de l'élément de distribution 12 équipée d'un premier clapet C1 commandé pour varier entre une première position et une deuxième position respectivement dans lesquelles le flux d'air peut passer et ne pas passer du capteur thermique solaire 10 vers l'intérieur de l'élément de distribution 12.

L'élément de distribution 12 comprend aussi une deuxième entrée 22 débouchant vers le milieu extérieur EX à l'élément de distribution 12 et au capteur thermique solaire 10 et équipée d'un deuxième clapet C2 commandé pour varier entre une première position et une deuxième position respectivement dans lesquelles un flux d'air peut passer et ne pas passer du milieu extérieur EX vers l'intérieur de l'élément de distribution 12.

Préférentiellement, la sortie de l'élément de distribution 12 et la deuxième entrée 22 de l'élément de distribution 12 sont en regard l'une de l'autre selon l'axe longitudinal du réservoir 11, c'est-à-dire suivant la direction Y. La deuxième entrée 22 de l'élément de distribution 12 est agencée en alignement avec l'entrée 19 du réservoir de stockage d'énergie thermique 11 selon l'axe longitudinal du réservoir de stockage d'énergie thermique 11, i.e. suivant la direction Y.

Le contrôle des premier et deuxième clapets C1, C2 permet de piloter le dispositif de chauffage et/ou de rafraichissement entre les différents modes précédemment décrits. Ce contrôle peut être avantageusement assuré par un système de pilotage contrôlant également le mélangeur 25 préférentiellement interposé entre le réservoir de stockage d'énergie thermique 11 et l'entrée du bâtiment 16.

En particulier, cela permet de constituer des moyens permettant de varier entre les deux configurations suivantes :
- soit une première configuration dans laquelle un flux d'air prélevé par le capteur thermique solaire 10 depuis le milieu extérieur repéré EX circule dans le capteur thermique solaire 10 puis dans le réservoir de stockage d'énergie thermique 11,
- soit une deuxième configuration dans laquelle le flux d'air circulant à travers le réservoir de stockage d'énergie thermique 11 n'a préalablement pas circulé à travers le capteur thermique solaire 10 et provient directement du milieu extérieur EX, en étant prélevé directement par l'élément de distribution 12.

La première configuration, adoptée lorsque le premier clapet C1 est dans la première position et le deuxième clapet C2 est dans la deuxième position, correspond à la situation de la figure 4. L'air circule à travers le capteur thermique solaire 10 puis circule dans la partie haute à gauche du capteur thermique solaire 10. Le premier clapet C1 est ouvert et le deuxième clapet C2 est fermé. L'air circule ensuite dans l'élément de distribution 12 puis dans le réservoir de stockage d'énergie thermique 11 par exemple de gauche à droite selon la direction Y avant d'être insufflé dans vers le milieu intérieur du bâtiment 16.

La deuxième configuration, adoptée lorsque le premier clapet C1 est dans la deuxième position et le deuxième clapet C2 est dans la première position, correspond à la situation de la figure 6. Le premier clapet C1 est fermé et le deuxième clapet C2 est ouvert. L'air prélevé directement par l'élément de distribution 12 au niveau de la deuxième entrée 22 circule par exemple de gauche à droite en traversant successivement l'élément de distribution 12 et le réservoir de stockage d'énergie thermique 11 avant d'être insufflé dans le milieu intérieur au bâtiment via le mélangeur 25. Ce fonctionnement permet de limiter les pertes de charges car l'air ne circule pas dans le capteur thermique solaire 10, ce qui peut être intéressant la nuit.

Le dispositif de chauffage et/ou de rafraichissement décrit précédemment permet d'améliorer le rendement énergétique par rapport aux solutions de l'art antérieur, d'améliorer la ventilation de l'air dans le réservoir de stockage d'énergie 11, notamment dans le cas où le réservoir de stockage d'énergie thermique 11 est accolé au capteur thermique solaire 10.

Il est possible de prévoir un élément de distribution additionnel (non représenté) situé de l'autre côté du réservoir de stockage d'énergie thermique 11, avec une sortie positionnée au milieu du réservoir de stockage d'énergie thermique 11. Le flux d'air peut alors ne traverser longitudinalement qu'une partie de la longueur L2 du réservoir de stockage d'énergie thermique 11 et pas la totalité de la longueur L2.

Enfin, le dispositif de chauffage et/ou de rafraichissement est de préférence destiné à être intégré à un bâtiment 16. Ceci est particulièrement intéressant pour réaliser des opérations de rénovation. Dans ce cas, il est possible de réaliser une isolation extérieure du bâtiment 16 tout en intégrant le dispositif de chauffage et/ou de rafraichissement. En particulier, un isolant extérieur tel que de la laine de verre peut être interposé entre le mur vertical du bâtiment 16 et le capteur thermique solaire 10 tandis qu'un isolant de type isolation sous vide peut être intercalé entre le mur et le réservoir de stockage d'énergie thermique 11.

Autrement dit, selon un aspect de l'invention, le dispositif de chauffage et/ou de rafraichissement pour bâtiment, comprend :
- un capteur thermique solaire 10,
- un réservoir de stockage d'énergie thermique 11,
le capteur et le réservoir étant agencés de sorte qu'un flux circule dans le capteur globalement selon la première direction, puis au niveau du réservoir globalement selon la deuxième direction, les première et deuxième directions étant sensiblement orthogonales.

Avantageusement, le réservoir de stockage est ménagé au-dessus du capteur solaire. Avantageusement encore, le réservoir de stockage est ménagé dans la largeur du capteur solaire.

Un mode de réalisation d'un système de ventilation peut comprendre un dispositif de chauffage et/ou de rafraichissement pour bâtiment tel que décrit précédemment.

Un mode de réalisation d'un bâtiment peut comprendre un dispositif de chauffage et/ou de rafraîchissement pour bâtiment tel que décrit précédemment ou un système de ventilation tel que décrit précédemment.

## Revendications

1. Dispositif de chauffage et/ou de rafraichissement pour bâtiment (16), comprenant un capteur thermique solaire (10) délimitant un premier volume de circulation fluidique, configuré de sorte à permettre une circulation d'un flux d'air à travers le capteur thermique solaire (10) selon une première direction générale d'écoulement (D1) incluse dans un premier plan (P1), ledit dispositif comprenant un réservoir de stockage d'énergie thermique (11) délimitant un deuxième volume de circulation fluidique, configuré de sorte à permettre une circulation à travers le réservoir de stockage d'énergie thermique (11) du flux d'air en provenance du capteur thermique solaire (10) selon une deuxième direction générale d'écoulement (D2) colinéaire à un axe longitudinal du réservoir de stockage d'énergie thermique (11), ladite deuxième direction (D2) étant sensiblement perpendiculaire à ladite première direction (D1) et contenue dans un deuxième plan (P2) parallèle à, ou confondu avec, le premier plan, au niveau d'une sortie (18) du capteur thermique solaire (10), le premier volume de circulation fluidique délimité par le capteur thermique solaire (10) étant constitué par au moins une lame d'air et le premier plan correspondant au plan d'orientation général de la lame d'air, **caractérisé en ce que** le réservoir de stockage d'énergie thermique (11) inclut un échangeur thermique et **en ce que** le réservoir de stockage d'énergie thermique est distinct du fluide caloporteur.

2. Dispositif de chauffage et/ou de rafraichissement pour bâtiment selon la revendication 1, **caractérisé en ce que** le premier volume délimité par le capteur thermique solaire (10) correspond à au moins une lame d'air et **en ce que** le premier plan (P1) est le plan d'orientation de ladite au moins une lame d'air au niveau de la sortie (18) du capteur thermique solaire (10).

3. Dispositif de chauffage et/ou de rafraichissement pour bâtiment selon la revendication 2, **caractérisé en ce que** ladite au moins une lame d'air est plane et le premier plan correspond au plan d'orientation générale de ladite au moins une lame d'air plane.

4. Dispositif de chauffage et/ou de rafraichissement pour bâtiment selon l'une des revendications 1 à 3, **caractérisé en ce que** le premier plan (P1) est un plan vertical qui correspond à une section principale du premier volume de circulation fluidique et la deuxième direction générale d'écoulement (D2) est sensiblement horizontale.

5. Dispositif de chauffage et/ou de rafraichissement pour bâtiment selon la revendication 4, **caractérisé en ce que** tout ou partie du réservoir de stockage d'énergie thermique (11) est disposé au-dessus du capteur thermique solaire (10) selon la verticale.

6. Dispositif de chauffage et/ou de rafraichissement pour bâtiment selon l'une des revendications 1 à 5, **caractérisé en ce que** le réservoir de stockage d'énergie thermique (11) est accolé au capteur thermique solaire (10).

7. Dispositif de chauffage et/ou de rafraichissement pour bâtiment selon l'une des revendications 1 à 6, **caractérisé en ce que** le capteur thermique solaire (10) comprend :
- une entrée (17) disposée dans une partie inférieure du capteur thermique solaire (10) permettant au flux d'air destiné à circuler à travers le capteur thermique solaire (10) de pénétrer dans le premier volume,
- la sortie (18) disposée dans une partie supérieure du capteur thermique solaire (10) permettant au flux d'air ayant circulé à travers le capteur thermique solaire (10) de sortir hors du premier volume,
- ladite entrée (17) et ladite sortie (18) étant décalées entre elles verticalement le long du premier plan,
et **en ce que** la sortie (18) du capteur thermique solaire (10) est configurée de sorte à permettre au flux d'air sortant du premier volume de s'écouler verticalement de bas en haut selon le premier plan à travers ladite sortie (18).

8. Dispositif de chauffage et/ou de rafraichissement pour bâtiment selon la revendication 7, **caractérisé en ce que** l'entrée (17) du capteur thermique solaire (10) est agencée sur toute la largeur (L1) du capteur thermique solaire (10) vue dans le premier plan et **en ce que** la sortie (18) du capteur thermique solaire (10) est agencée sur une partie (L3) de la largeur (L1) du capteur thermique solaire (10) et située uniquement sur un côté latéral droit ou gauche du capteur thermique solaire (10) suivant sa largeur (L1) et **en ce que en ce que** la sortie (18) du capteur thermique solaire (10) est configurée de sorte à permettre au flux d'air sortant du premier volume de s'écouler verticalement de bas en haut selon le premier plan à travers ladite sortie (18).

9. Dispositif de chauffage et/ou de rafraichissement pour bâtiment selon l'une des revendications 1 à 8, **caractérisé en ce que** le réservoir de stockage d'énergie thermique (11) comprend :
- une entrée (19) disposée d'un côté longitudinal du réservoir de stockage d'énergie thermique (11) vu dans l'axe longitudinal du réservoir de stockage d'énergie thermique (11) permettant au flux d'air provenant du capteur thermique solaire (10) de pénétrer dans le deuxième volume,
- une sortie (20) disposée d'un côté longitudinal opposé du réservoir de stockage d'énergie thermique (11) selon l'axe longitudinal du réservoir de stockage d'énergie thermique (11) permettant au flux d'air de sortir hors du deuxième volume après la traversée du réservoir de stockage d'énergie thermique (11),
- ladite entrée (19) et ladite sortie (20) étant décalées entre elles selon l'axe longitudinal du réservoir de stockage d'énergie thermique (11), l'entrée (19) et la sortie (20) du réservoir de stockage d'énergie thermique (11) étant éventuellement chacune configurées de sorte à permettre un écoulement horizontal du flux d'air qui la traverse.

10. Dispositif de chauffage et/ou de rafraichissement pour bâtiment selon l'une des revendications 1 à 9, **caractérisé en ce qu'**il comprend au moins un élément de distribution (12) collectant le flux d'air ayant circulé à travers le capteur thermique solaire (10) et distribuant le flux d'air collecté vers le réservoir de stockage d'énergie thermique (11) et **en ce que** l'élément de distribution (12) est disposé au-dessus du capteur thermique solaire (10) selon la verticale et à côté du réservoir de stockage d'énergie thermique (11) selon l'horizontale, l'élément de distribution (12) étant disposé dans l'alignement du réservoir de stockage d'énergie thermique (11) selon l'axe longitudinal du réservoir de stockage d'énergie thermique (11).

11. Dispositif de chauffage et/ou de rafraichissement pour bâtiment selon la revendication 10 et selon la revendication 7 ou 8, **caractérisé en ce que** la sortie (18) du capteur thermique solaire (10) débouche dans l'élément de distribution (12) au niveau d'une première entrée (21) de l'élément de distribution (12) équipée d'un premier clapet (C1) commandé pour varier entre une première position et une deuxième position respectivement dans lesquelles le flux d'air peut passer et ne pas passer du capteur thermique solaire (10) vers l'intérieur de l'élément de distribution (12).

12. Dispositif de chauffage et/ou de rafraichissement pour bâtiment selon la revendication 10 et selon la revendication 9, **caractérisé en ce que** l'entrée (19) du réservoir de stockage d'énergie thermique (11) débouche dans l'élément de distribution (12) au niveau d'une sortie de l'élément de distribution (12).

13. Dispositif de chauffage et/ou de rafraichissement pour bâtiment selon l'une des revendications 11 ou 12, **caractérisé en ce que** l'élément de distribution (12) comprend une deuxième entrée (22) débouchant vers un milieu extérieur (EX) à l'élément de distribution (12) et au capteur thermique solaire (10) et équipée d'un deuxième clapet (C2) commandé pour varier entre une première position et une deuxième position respectivement dans lesquelles un flux d'air peut passer et ne pas passer dudit milieu extérieur (EX) vers l'intérieur de l'élément de distribution (12).

14. Dispositif de chauffage et/ou de rafraichissement pour bâtiment selon les revendications 12 et 13, **caractérisé en ce que** la sortie de l'élément de distribution (12) et la deuxième entrée (22) de l'élément de distribution (12) sont en regard l'une de l'autre selon l'axe longitudinal du réservoir de stockage d'énergie thermique (11).

15. Dispositif de chauffage et/ou de rafraichissement pour bâtiment selon l'une des revendications 1 à 14, **caractérisé en ce que** le réservoir de stockage d'énergie thermique (11) comprend une pluralité de plaques (23) parallèles selon l'axe longitudinal du réservoir (11) et chacune incluant un matériau à changement de phase et/ou **en ce que** le réservoir de stockage d'énergie thermique (11) comprend un carter formé dans un matériau thermiquement conducteur et **en ce que** le dispositif comprend un élément d'isolation thermique (24) disposé entre le capteur thermique solaire (10) et ledit carter.

16. Bâtiment ou système de ventilation comprenant un dispositif selon l'une des revendications précédentes.

## Patentansprüche

1. Heiz- und/oder Kühlvorrichtung für ein Gebäude (16), die einen thermischen Solarkollektor (10) beinhaltet, der ein erstes Fluidzirkulationsvolumen abgrenzt, das dazu konfiguriert ist, eine Zirkulation eines Luftstroms durch den thermischen Solarkollektor (10) gemäß einer ersten allgemeinen Strömungsrichtung (D1), die in einer ersten Ebene (P1) enthalten ist, zu gestatten, wobei die Vorrichtung einen Wärmeenergie-Speichertank (11) beinhaltet, der ein zweites Fluidzirkulationsvolumen abgrenzt, das dazu konfiguriert ist, eine Zirkulation des von dem thermischen Solarkollektor (10) kommenden Luftstroms durch den Wärmeenergie-Speichertank (11) gemäß einer zweiten allgemeinen Strömungsrichtung (D2), die zu einer Längsachse des Wärmeenergie-Speichertanks (11) kollinear ist, zu gestatten, wobei die zweite Richtung (D2) zu der ersten Richtung (D1) im Wesentlichen senkrecht ist und in einer zweiten Ebene (P2) enthalten ist, die im Bereich eines Ausgangs (18) des thermischen Solarkollektors (10) parallel zu der ersten Ebene ist oder mit dieser zusammenfällt, wobei das durch den thermischen Solarkollektor (10) abgegrenzte erste Fluidzirkulationsvolumen aus mindestens einem Luftspalt besteht und die erste Ebene der allgemeinen Ausrichtungsebene des Luftspalts entspricht, **dadurch gekennzeichnet, dass** der Wärmeenergie-Speichertank (11) einen Wärmetauscher aufweist und dass der Wärmeenergie-Speichertank von dem Wärmeträgerfluid getrennt ist.

2. Heiz- und/oder Kühlvorrichtung für ein Gebäude nach Anspruch 1, **dadurch gekennzeichnet, dass** das durch den thermischen Solarkollektor (10) abgegrenzte erste Volumen mindestens einem Luftspalt entspricht und dass die erste Ebene (P1) die Ausrichtungsebene des mindestens einen Luftspalts im Bereich des Ausgangs (18) des thermischen Solarkollektors (10) ist.

3. Heiz- und/oder Kühlvorrichtung für ein Gebäude nach Anspruch 2, **dadurch gekennzeichnet, dass** der mindestens eine Luftspalt eben ist und die erste Ebene der allgemeinen Ausrichtungsebene des mindestens einen ebenen Luftspalts entspricht.

4. Heiz- und/oder Kühlvorrichtung für ein Gebäude nach einem der Ansprüche 1 bis 3, **dadurch gekennzeichnet, dass** die erste Ebene (P1) eine vertikale Ebene ist, die einem Hauptabschnitt des ersten Fluidzirkulationsvolumens entspricht, und die zweite allgemeine Strömungsrichtung (D2) im Wesentlichen horizontal ist.

5. Heiz- und/oder Kühlvorrichtung für ein Gebäude nach Anspruch 4, **dadurch gekennzeichnet, dass** der gesamte oder ein Teil des Wärmeenergie-Speichertanks (11) gemäß der Vertikalen oberhalb des thermischen Solarkollektors (10) angeordnet ist.

6. Heiz- und/oder Kühlvorrichtung für ein Gebäude nach einem der Ansprüche 1 bis 5, **dadurch gekennzeichnet, dass** der Wärmeenergie-Speichertank (11) an dem thermischen Solarkollektor (10) angebracht ist.

7. Heiz- und/oder Kühlvorrichtung für ein Gebäude nach einem der Ansprüche 1 bis 6, **dadurch gekennzeichnet, dass** der thermische Solarkollektor (10) Folgendes beinhaltet:
- einen Eingang (17), der in einem unteren Teil des thermischen Solarkollektors (10) angeordnet ist und es dem Luftstrom, der durch den thermischen Solarkollektor (10) zirkulieren soll, gestattet, in das erste Volumen einzutreten,
- den Ausgang (18), der in einem oberen Teil des thermischen Solarkollektors (10) angeordnet ist und es dem Luftstrom, der durch den thermischen Solarkollektor (10) zirkuliert ist, gestattet, aus dem ersten Volumen auszutreten,
- wobei der Eingang (17) und der Ausgang (18) entlang der ersten Ebene vertikal zueinander versetzt sind,
und dass der Ausgang (18) des thermischen Solarkollektors (10) dazu konfiguriert ist, es dem Luftstrom, der aus dem ersten Volumen austritt, zu gestatten, gemäß der ersten Ebene vertikal von unten nach oben durch den Ausgang (18) zu strömen.

8. Heiz- und/oder Kühlvorrichtung für ein Gebäude nach Anspruch 7, **dadurch gekennzeichnet, dass** der Eingang (17) des thermischen Solarkollektors (10) in der ersten Ebene gesehen über die gesamte Breite (L1) des thermischen Solarkollektors (10) eingerichtet ist und dass der Ausgang (18) des thermischen Solarkollektors (10) über einen Teil (L3) der Breite (L1) des thermischen Solarkollektors (10) eingerichtet ist und sich nur auf einer rechten oder linken lateralen Seite des thermischen Solarkollektors (10) entlang dessen Breite (L1) befindet und dass dass der Ausgang (18) des thermischen Solarkollektors (10) dazu konfiguriert ist, es dem aus dem ersten Volumen austretenden Luftstrom zu gestatten, gemäß der ersten Ebene vertikal von unten nach oben durch den Ausgang (18) zu strömen.

9. Heiz- und/oder Kühlvorrichtung für ein Gebäude nach einem der Ansprüche 1 bis 8, **dadurch gekennzeichnet, dass** der Wärmeenergie-Speichertank (11) Folgendes beinhaltet:
- einen Eingang (19), der, in der Längsachse des Wärmeenergie-Speichertanks (11) gesehen, auf einer Längsseite des Wärmeenergie-Speichertanks (11) angeordnet ist und der es dem von dem thermischen Solarkollektor (10) kommenden Luftstrom gestattet, in das zweite Volumen einzutreten,
- einen Ausgang (20), der gemäß der Längsachse des Wärmeenergie-Speichertanks (11) auf einer entgegengesetzten Längsseite des Wärmeenergie-Speichertanks (11) angeordnet ist und der es dem Luftstrom gestattet, nach dem Durchgang durch den Wärmeenergie-Speichertank (11) aus dem zweiten Volumen auszutreten,
- wobei der Eingang (19) und der Ausgang (20) gemäß der Längsachse des Wärmeenergie-Speichertanks (11) zueinander versetzt sind, wobei der Eingang (19) und der Ausgang (20) des Wärmeenergie-Speichertanks (11) gegebenenfalls jeweils dazu konfiguriert sind, eine horizontale Strömung des sie durchquerenden Luftstroms zu gestatten.

10. Heiz- und/oder Kühlvorrichtung für ein Gebäude nach einem der Ansprüche 1 bis 9, **dadurch gekennzeichnet, dass** sie mindestens ein Verteilungselement (12) beinhaltet, das den Luftstrom, der durch den thermischen Solarkollektor (10) zirkuliert ist, sammelt und den gesammelten Luftstrom zu dem Wärmeenergie-Speichertank (11) hin verteilt, und dass das Verteilungselement (12) gemäß der Vertikalen oberhalb des thermischen Solarkollektors (10) und gemäß der Horizontalen neben dem Wärmeenergie-Speichertank (11) angeordnet ist, wobei das Verteilungselement (12) gemäß der Längsachse des Wärmeenergie-Speichertanks (11) in der Verlängerung des Wärmeenergie-Speichertanks (11) angeordnet ist.

11. Heiz- und/oder Kühlvorrichtung für ein Gebäude nach Anspruch 10 und nach Anspruch 7 oder 8, **dadurch gekennzeichnet, dass** der Ausgang (18) des thermischen Solarkollektors (10) im Bereich eines erstes Eingangs (21) des Verteilungselements (12) in das Verteilungselement (12) mündet, welcher mit einer ersten Klappe (C1) ausgerüstet ist, die gesteuert wird, um zwischen einer ersten Stellung und einer zweiten Stellung zu wechseln, in denen der Luftstrom von dem thermischen Solarkollektor (10) in das Innere des Verteilungselements (12) jeweils passieren bzw. nicht passieren kann.

12. Heiz- und/oder Kühlvorrichtung für ein Gebäude nach Anspruch 10 und nach Anspruch 9, **dadurch gekennzeichnet, dass** der Eingang (19) des Wärmeenergie-Speichertanks (11) im Bereich eines Ausgangs des Verteilungselements (12) in das Verteilungselement (12) mündet.

13. Heiz- und/oder Kühlvorrichtung für ein Gebäude nach einem der Ansprüche 11 oder 12, **dadurch gekennzeichnet, dass** das Verteilungselement (12) einen zweiten Eingang (22) beinhaltet, der in eine äußere Umgebung (EX) des Verteilungselements (12) und des thermischen Solarkollektors (10) mündet und mit einer zweiten Klappe (C2) ausgerüstet ist, die gesteuert wird, um zwischen einer ersten Stellung und einer zweiten Stellung zu wechseln, in denen ein Luftstrom von der äußeren Umgebung (EX) in das Innere des Verteilungselements (12) jeweils passieren bzw. nicht passieren kann.

14. Heiz- und/oder Kühlvorrichtung für ein Gebäude nach den Ansprüchen 12 und 13, **dadurch gekennzeichnet, dass** der Ausgang des Verteilungselements (12) und der zweite Eingang (22) des Verteilungselements (12) einander gemäß der Längsachse des Wärmeenergie-Speichertanks (11) gegenüberliegen.

15. Heiz- und/oder Kühlvorrichtung für ein Gebäude nach einem der Ansprüche 1 bis 14, **dadurch gekennzeichnet, dass** der Wärmeenergie-Speichertank (11) eine Vielzahl von Platten (23) beinhaltet, die gemäß der Längsachse des Tanks (11) parallel sind und jeweils ein Phasenwechselmaterial aufweisen, und/oder dass der Wärmeenergie-Speichertank (11) ein Gehäuse beinhaltet, das aus einem wärmeleitenden Material gebildet ist, und dass die Vorrichtung ein Wärmeisolationselement (24) beinhaltet, das zwischen dem thermischen Solarkollektor (10) und dem Gehäuse angeordnet ist.

16. Gebäude oder Belüftungssystem, das eine Vorrichtung nach einem der vorhergehenden Ansprüche beinhaltet.

## Claims

1. Heating and/or cooling device for a building (16), comprising a solar heat sensor (10) delimiting a first fluidic circulation volume, configured so as to allow a circulation of an airstream through the solar heat sensor (10) in a first general direction of flow (D1) included in a first plane (P1), said device comprising a heat energy storage tank (11) delimiting a second fluidic circulation volume, configured so as to allow a circulation through the heat energy storage tank (11) of the airstream originating from the solar heat sensor (10) in a second general direction of flow (D2) colinear to a longitudinal axis of the heat energy storage tank (11), said second direction (D2) being substantially at right angles to said first direction (D1) and contained in a second plane (P2) parallel to, or coinciding with, the first plane, at an output (18) of the solar heat sensor (10), the first fluidic circulation volume delimited by the solar heat sensor (10) being composed by at least one air film and the first plane corresponding to the general plane of orientation of the air film, **characterized in that** the heat energy storage tank (11) includes a heat exchanger and **in that** the heat energy storage tank is distinct from the heat-transfer fluid.

2. Heating and/or cooling device for a building according to Claim 1, **characterized in that** the first volume delimited by the solar heat sensor (10) corresponds to at least one air film and **in that** the first plane (P1) is the plane of orientation of said at least one air film at the output (18) of the solar heat sensor (10).

3. Heating and/or cooling device for a building according to Claim 2, **characterized in that** said at least one air film is planar and the first plane corresponds to the general plane of orientation of said at least one planar air film.

4. Heating and/or cooling device for a building according to one of Claims 1 to 3, **characterized in that** the first plane (P1) is a vertical plane which corresponds to a main section of the first fluidic circulation volume and the second general direction of flow (D2) is substantially horizontal.

5. Heating and/or cooling device for a building according to Claim 4, **characterized in that** all or part of the heat energy storage tank (11) is disposed vertically above the solar heat sensor (10).

6. Heating and/or cooling device for a building according to one of Claims 1 to 5, **characterized in that** the heat energy storage tank (11) is attached to the solar heat sensor (10).

7. Heating and/or cooling device for a building according to one of Claims 1 to 6, **characterized in that** the solar heat sensor (10) comprises:
- an input (17) disposed in a bottom part of the solar heat sensor (10) allowing the airstream intended to circulate through the solar heat sensor (10) to enter into the first volume,
- the output (18) disposed in a top part of the solar heat sensor (10) allowing the airstream having circulated through the solar heat sensor (10) to exit from the first volume,
- said input (17) and said output (18) being vertically offset from one another along the vertical plane,
and **in that** the output (18) of the solar heat sensor (10) is configured so as to allow the airstream exiting from the first volume to flow vertically upwards according to the first plane through said output (18).

8. Heating and/or cooling device for a building according to Claim 7, **characterized in that** the input (17) of the solar heat sensor (10) is arranged over the entire width (L1) of the solar heat sensor (10) as seen in the first plane and **in that** the output (18) of the solar heat sensor (10) is arranged over a part (L3) of the width (L1) of the solar heat sensor (10) and situated only on a right or left lateral side of the solar heat sensor (10) according to its width (L1) and **in that in that** the output (18) of the solar heat sensor (10) is configured so as to allow the airstream exiting from the first volume to flow vertically upwards according to the first plane through said output (18).

9. Heating and/or cooling device for a building according to one of Claims 1 to 8, **characterized in that** the heat energy storage tank (11) comprises:
- an input (19) disposed on a longitudinal side of the heat energy storage tank (11) when viewed in the longitudinal axis of the heat energy storage tank (11) allowing the airstream originating from the solar heat sensor (10) to enter into the second volume,
- an output (20) disposed on an opposite longitudinal side of the heat energy storage tank (11) according to the longitudinal axis of the heat energy storage tank (11) allowing the airstream to exit from the second volume after having passed through the heat energy storage tank (11),
- said input (19) and said output (20) being offset from one another according to the longitudinal axis of the heat energy storage tank (11), the input (19) and the output (20) of the heat energy storage tank (11) being possibly each configured so as to allow a horizontal flow of the airstream which passes through it.

10. Heating and/or cooling device for a building according to one of Claims 1 to 9, **characterized in that** it comprises at least one distribution element (12) collecting the airstream having circulated through the solar heat sensor (10) and distributing the collected airstream to the heat energy storage tank (11) and **in that** the distribution element (12) is disposed vertically above the solar heat sensor (10) and horizontally alongside the heat energy storage tank (11), the distribution element (12) being disposed in the alignment of the heat energy storage tank (11) according to the longitudinal axis of the heat energy storage tank (11).

11. Heating and/or cooling device for a building according to Claims 10 and according to Claim 7 or 8, **characterized in that** the output (18) of the solar heat sensor (10) emerges in the distribution element (12) at a first input (21) of the distribution element (12) equipped with a first valve (C1) controlled to vary between a first position and a second position respectively in which the airstream can pass and cannot pass from the solar heat sensor (10) to the interior of the distribution element (12).

12. Heating and/or cooling device for a building according to Claim 10 and according to Claim 9, **characterized in that** the input (19) of the heat energy storage tank (11) emerges in the distribution element (12) at an output of the distribution element (12).

13. Heating and/or cooling device for a building according to one of Claims 11 and 12, **characterized in that** the distribution element (12) comprises a second input (22) emerging towards a medium (EX) external to the distribution element (12) and to the solar heat sensor (10) and equipped with a second valve (C2) controlled to vary between a first position and a second position respectively in which an airstream can pass and cannot pass from said external medium (EX) to the interior of the distribution element (12).

14. Heating and/or cooling device for a building according to Claims 12 and 13, **characterized in that** the output of the distribution element (12) and the second input (22) of the distribution element (12) are opposite one another according to the longitudinal axis of the heat energy storage tank (11).

15. Heating and/or cooling device for a building according to one of Claims 1 to 14, **characterized in that** the heat energy storage tank (11) comprises a plurality of plates (23) that are parallel according to the longitudinal axis of the tank (11) and each including a phase-change material and/or **in that** the heat energy storage tank (11) comprises a casing formed in a thermally conductive material and **in that** the device comprises a thermal insulation element (24) disposed between the solar heat sensor (10) and said casing.

16. Building or ventilation system comprising a device according to one of the preceding claims.
